# EUROPEAN PATENT APPLICATION

(11) **EP 4 819 699 A1**
(43) Date of publication of application: **07.10.2026**
(21) Application number: 23959962.4
(22) Date of filing: 01.12.2023
(51) Int. Cl.: H04W 52/02, H04W 4/00, H04W 28/04

(54) **INFORMATION TRANSMISSION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guangdong 523860 (CN); ZHANG, Yi, Dongguan, Guangdong 523860 (CN); XU, Jing, Dongguan, Guangdong 523860 (CN); ZHANG, Zhi, Dongguan, Guangdong 523860 (CN)
(74) Representative: Taor, Simon Edward William
(86) International application number: PCT/CN2023/135956
(87) International publication number: WO 2025/112056

(57) **Abstract**

An information transmission method and apparatus, and a device and a storage medium, which relate to the technical field of communications. The method is executed by a terminal device. The method comprises: receiving first downlink data, wherein the first downlink data comprises at least one piece of first indication information, and the first indication information is used for indicating a transmission parameter of at least one piece of second information or a channel (210). By means of the method, the first indication information used for indicating a transmission parameter of second information or a channel is carried in the downlink data, such that a terminal device does not need to additionally perform blind detection on a downlink control channel, thereby effectively reducing the power consumption of the terminal device.

## Description

### TECHNICAL FIELD

Embodiments of the present disclosure relate to the field of communication technologies, and in particular, to an information transmission method, apparatus, device, and storage medium.

### BACKGROUND

A terminal device receives downlink control signaling sent by a network device, and receives downlink data information based on transmission parameters indicated in the downlink control signaling. This scheduling method is generally referred to as dynamic scheduling. The advantage of dynamic scheduling lies in determining transmission parameters according to real-time traffic volume and physical channel conditions, resulting in high transmission efficiency. However, dynamic scheduling requires the terminal device to perform blind detection on the downlink control signaling, which incurs high reception complexity.

### SUMMARY

Embodiments of the present disclosure provide an information transmission method, apparatus, device, and storage medium. The technical solution is as follows.

According to an aspect of an embodiment of the present disclosure, there is provided an information transmission method, the method being performed by a terminal device, the method including:
receiving first downlink data, wherein the first downlink data includes at least one first indication information, and the first indication information is used to indicate transmission parameters of at least one second information or channel.

According to an aspect of an embodiment of the present disclosure, there is provided an information transmission method, the method being executed by a network device, the method including:
sending first downlink data, wherein the first downlink data includes at least one first indication information, and the first indication information is used to indicate transmission parameters of at least one second information or channel.

According to an aspect of an embodiment of the present disclosure, there is provided an information transmission apparatus, the apparatus including:
a receiving module, configured to receive first downlink data, wherein the first downlink data includes at least one first indication information, and the first indication information is used to indicate transmission parameters of at least one second information or channel.

According to an aspect of an embodiment of the present disclosure, there is provided an information transmission apparatus, the apparatus including:
a sending module, configured to send first downlink data, wherein the first downlink data includes at least one first indication information, and the first indication information is used to indicate transmission parameters of at least one second information or channel.

According to an aspect of an embodiment of the present disclosure, there is provided a communication device, the communication device including a processor and a memory, the memory storing a computer program, and the processor executing the computer program to implement the above information transmission method. The communication device is a terminal device, or the communication device is a network device.

According to an aspect of an embodiment of the present disclosure, there is provided a computer-readable storage medium, the storage medium storing a computer program, and the computer program being used to be executed by a processor to implement the above information transmission method.

According to an aspect of an embodiment of the present disclosure, there is provided a chip, the chip including a programmable logic circuit and/or program instructions, and when the chip is running, it is used to implement the above information transmission method.

According to an aspect of an embodiment of the present disclosure, there is provided a computer program product, the computer program product including computer instructions, the computer instructions being stored in a computer-readable storage medium, and a processor reads and executes the computer instructions from the computer-readable storage medium to implement the above information transmission method.

The technical solution provided by the embodiments of the present disclosure may include the following beneficial effects:
By carrying, in downlink data, the first indication information used to indicate transmission parameters of the second information or channel, the terminal device does not need to perform additional blind detection on the downlink control channel, which reduces reception complexity and effectively reduces the power consumption of the terminal device.

### BRIEF DESCRIPTION OF THE DRAWINGS

FIG. 1 is a schematic diagram of a network architecture provided by an embodiment of the present disclosure;
FIG. 2 is a flowchart of an information transmission method provided by an embodiment of the present disclosure;
FIG. 3 is a schematic diagram of an information transmission method provided by an embodiment of the present disclosure;
FIG. 4 is a block diagram of an information transmission apparatus provided by an embodiment of the present disclosure;
FIG. 5 is a block diagram of an information transmission apparatus provided by another embodiment of the present disclosure;
FIG. 6 is a schematic structural diagram of a terminal device provided by an embodiment of the present disclosure; and
FIG. 7 is a schematic structural diagram of a network device provided by an embodiment of the present disclosure.

### DETAILED DESCRIPTION

To make the objectives, technical solutions, and advantages of the present disclosure clearer, the implementations of the present disclosure will be further described in detail below with reference to the accompanying drawings.

The network architecture and business scenarios described in the embodiments of the present disclosure are for the purpose of illustrating the technical solutions of the embodiments of the present disclosure more clearly, and do not constitute a limitation on the technical solutions provided by the embodiments of the present disclosure. Those of ordinary skill in the art will appreciate that with the evolution of network architecture and the emergence of new business scenarios, the technical solutions provided by the embodiments of the present disclosure are equally applicable to similar technical problems.

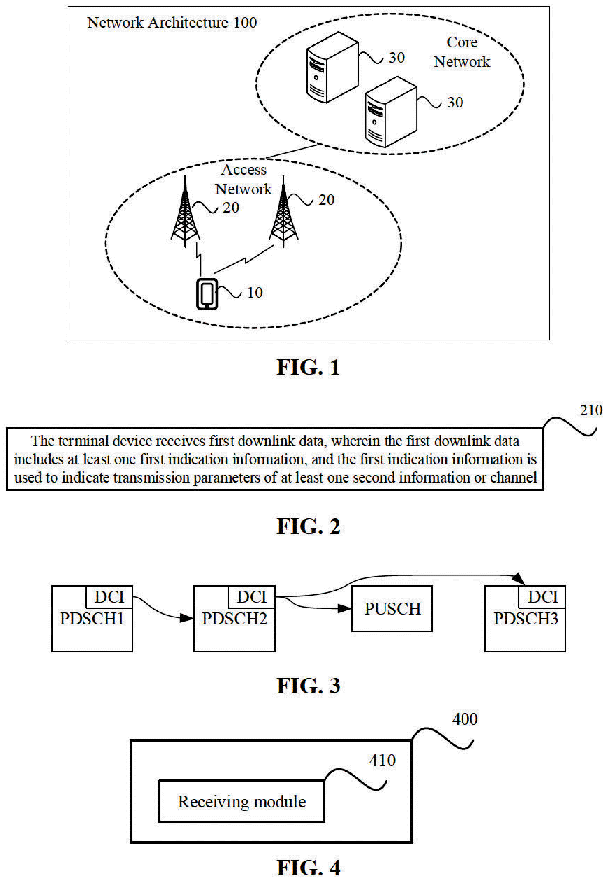

Please refer to FIG. 1, which shows a schematic diagram of a network architecture 100 provided by an embodiment of the present disclosure. The network architecture 100 may include: a terminal device 10, an access network device 20, and a core network element 30.

The terminal device 10 may refer to User Equipment (UE), Station (STA), access terminal, user unit, user station, mobile station, mobile station, remote station, remote terminal, mobile device, wireless communication device, user agent, or user device. In some embodiments, the terminal device 10 may also be a cellular phone, a cordless phone, a Session Initiation Protocol (SIP) phone, a Wireless Local Loop (WLL) station, a Personal Digital Assistant (PDA), a handheld device with wireless communication function, a computing device or other processing device connected to a wireless modem, an in-vehicle device, a wearable device, a terminal device in 5th Generation System (5GS) or a terminal device in a future evolved Public Land Mobile Network (PLMN), etc., which is not limited in the embodiments of the present disclosure. For ease of description, the devices mentioned above are collectively referred to as terminal devices. The number of terminal devices 10 is usually plural, and one or more terminal devices 10 may be distributed within the cell managed by each access network device 20. A terminal device may also be simply referred to as a terminal or UE, and those skilled in the art can understand its meaning.

An access network device 20 is a device deployed in an access network to provide wireless communication functions for terminal devices 10. The access network device 20 may include various forms of macro base stations, micro base stations, relay stations, Access Points (APs), and so on. In systems using different radio access technologies, the names of devices with access network device functions may differ. For example, in a 5G New Radio (NR) system, it is called Next Generation Node B (gNodeB or gNB). With the evolution of communication technology, the name "access network device" may change. For ease of description, in the embodiments of the present disclosure, the above-mentioned devices that provide wireless communication functions for the terminal device 10 are collectively referred to as access network devices. In some embodiments, a communication relationship can be established between the terminal device 10 and the core network element 30 via the access network device 20. Exemplarily, in an Long Term Evolution (LTE) system, the access network device 20 may be an EUTRAN (Evolved Universal Terrestrial Radio Access Network) or one or more eNodeBs in the EUTRAN; in a 5G NR system, the access network device 20 may be a Radio Access Network (RAN) or one or more gNBs in the RAN. In the embodiments of the present disclosure, unless otherwise specified, the term "network device" refers to the access network device 20, such as a base station.

A core network element 30 is a network element deployed in the core network. The functions of the core network element 30 are mainly to provide user connection, manage users, and carry services, serving as a bearer network to provide an interface to an external network. For example, core network elements in a 5G NR system may include Access and Mobility Management Function (AMF) entities, User Plane Function (UPF) entities, and Session Management Function (SMF) entities.

In some embodiments, the access network device 20 and the core network element 30 communicate with each other via a certain air interface technology, such as the NG interface in a 5G NR system. The access network device 20 and the terminal device 10 communicate with each other via a certain air interface technology, such as the Uu interface.

In the embodiments of the present disclosure, "5G NR system" may also be referred to as a 5G system or NR system, but those skilled in the art can understand its meaning. The technical solutions described in the embodiments of the present disclosure may be applicable to LTE systems, 5G NR systems, subsequent evolution systems of 5G NR systems (e.g., Beyond 5G (B5G) systems, 6th Generation (6G) systems), and may also be applicable to other communication systems such as NB-IoT (Narrow Band Internet of Things) systems, which is not limited in the present disclosure.

In the embodiments of the present disclosure, a network device may provide services for a cell, and a terminal device communicates with the network device via transmission resources (e.g., frequency domain resources, or spectrum resources) used on a carrier of the cell. The cell may be a cell corresponding to the network device (e.g., a base station). The cell may belong to a macro base station, or may belong to a base station corresponding to a small cell. The small cell here may include: a metro cell, a micro cell, a pico cell, a femto cell, etc. These small cells have the characteristics of small coverage and low transmission power, and are suitable for providing high-rate data transmission services.

Before introducing the technical solutions of the present disclosure, some related technical knowledge involved in the present disclosure will be introduced and explained. The following related technologies, as optional solutions, may be arbitrarily combined with the technical solutions of the embodiments of the present disclosure, and they all fall within the protection scope of the embodiments of the present disclosure. The embodiments of the present disclosure include at least part of the following content.

Communication systems usually support two downlink data transmission methods:
1. A terminal device receives downlink control signaling sent by a network device, and receives downlink data transmission based on parameters in the downlink control signaling. This scheduling method is generally referred to as dynamic scheduling (DS). The advantage of dynamic scheduling lies in that a scheduler determines transmission parameters according to real-time traffic volume and physical channel conditions, resulting in high transmission efficiency. The terminal device first receives downlink control signaling, and receives a downlink data channel or sends an uplink data channel based on parameters indicated in the downlink control signaling. However, the terminal device performs blind detection on the downlink control signaling, which incurs high reception complexity. Additionally, the processing delay at the receiving end includes two parts: demodulating the downlink control signaling and demodulating the downlink data.
2. A terminal device receives higher layer signaling (e.g., Radio Resource Control (RRC)) sent by a network device, and receives downlink data transmission based on parameters in the higher layer signaling. In LTE and NR systems, this is called semi-persistent scheduling (SPS). For data with periodic arrival and constant traffic volume and stable transmission conditions (e.g., without fast movement), using semi-persistent scheduling can reduce downlink control signaling overhead in the system and simplify reception processing at the receiving end.

However, the dynamic scheduling method requires the terminal device to perform blind detection on the downlink control signaling, which results in high reception complexity and higher power consumption required for the terminal device to perform blind detection. The semi-persistent scheduling method, on the other hand, has a relatively narrow application range and is not suitable for scenarios where downlink control signaling needs to be flexibly adjusted.

Embodiments of the present disclosure provide an information transmission method, which can carry indication information in downlink data information, or a downlink data channel, wherein the indication information is used to indicate transmission parameters of information or a channel for subsequent transmission. The terminal device does not need to perform blind detection, which can effectively reduce the power consumption of the terminal device.

Please refer to FIG. 2, which shows a flowchart of an information transmission method provided by an embodiment of the present disclosure. The method is performed by a terminal device. The method may include the following step 210.

Step 210, a terminal device receives first downlink data, wherein the first downlink data includes at least one first indication information, and the first indication information is used to indicate transmission parameters of at least one second information or channel.

Correspondingly, a network device sends the first downlink data.

In some embodiments, the second information or channel is transmitted after the first downlink data. Alternatively, transmission resources occupied by the second information or channel are after transmission resources occupied by the first downlink data.

Exemplarily, as shown in FIG. 3, the first downlink data is Physical Downlink Shared Channel 1 (PDSCH1), and PDSCH1 carries Downlink Control Information (DCI) (first indication information), wherein the DCI is used to indicate transmission parameters of PDSCH2. Here, PDSCH2 is the second information or channel relative to PDSCH1. The DCI carried in PDSCH2 is used to indicate transmission parameters of Physical Uplink Shared Channel (PUSCH). Here, PUSCH is the second information or channel relative to PDSCH2.

In some embodiments, the first downlink data may also be referred to as first data information, downlink data information, etc., which is not limited in the present disclosure.

In some embodiments, the first downlink data is included in first downlink information. In this case, the above step 210 may be implemented as the terminal device receiving first downlink information. Correspondingly, the network device sends the first downlink information.

In some embodiments, the first downlink data is carried on a first downlink channel. In this case, the above step 210 may be implemented as the terminal device receiving a first downlink channel. Correspondingly, the network device sends the first downlink channel.

It should be noted that the first downlink data mentioned in the embodiments of the present disclosure may be replaced with first downlink information, or may be replaced with a first downlink channel; the channel carrying the first downlink data may be replaced with a first downlink channel, or may be replaced with a channel carrying the first downlink information. This will not be described repeatedly in the present disclosure.

In some embodiments, the first downlink channel is a data channel, i.e., the channel is used to transmit downlink data information. For example, the first downlink channel is used to transmit the first downlink data. Exemplarily, the first downlink channel is PDSCH. Of course, the first downlink channel may also be other data channels for transmitting downlink data, which is not limited in the present disclosure.

In some embodiments, the second information or channel may be uplink information or channel, or downlink information or channel, which is not limited in the present disclosure. Exemplarily, the first downlink channel is PDSCH, and the second channel may be one or more of Physical Uplink Control Channel (PUCCH), PUSCH, PDSCH, and Physical Downlink Control Channel (PDCCH).

In some embodiments, there is an association relationship between the second information or channel and the first downlink data. The association relationship means that the second information or channel and the first downlink data appear in pairs. For example, after the terminal device receives the first downlink data, it needs to send feedback information to the network device, and this feedback information can serve as the second information or channel.

In some embodiments, the association relationship is preconfigured. In some embodiments, the association relationship may be predefined in a protocol, preconfigured by the network device, or indicated in the first indication information, which is not limited in the present disclosure.

In some embodiments, the second information or channel includes at least one of the following: response information of the first downlink data; information obtained based on processing the first downlink data, the processing including demodulation and/or decoding; measurement or prediction information obtained based on the first downlink data; preconfigured information or channel having an association relationship with the first downlink data.

In some embodiments, the second information includes at least one of the following: response information of the first downlink data; information obtained based on processing the first downlink data, the processing including demodulation and/or decoding; measurement or prediction information obtained based on the first downlink data; preconfigured information having an association relationship with the first downlink data.

In some embodiments, the second channel includes at least one of the following: a channel carrying response information of the first downlink data; a channel carrying information obtained based on processing the first downlink data, the processing including demodulation and/or decoding; a channel carrying measurement or prediction information obtained based on the first downlink data; a preconfigured channel having an association relationship with the first downlink data.

Next, taking the second information as an example, the second information or channel is briefly described.

In some embodiments, the second information is response information for the first downlink data. Exemplarily, the first downlink data is instruction information, wherein the instruction information is control information for a service, rather than signaling sent by the physical layer. For example, the instruction information may be a gesture control instruction in an Extended Reality (XR) service, an instruction sent to a robotic arm, etc. The second information is response information for the instruction information. For example, if the instruction information is a gesture control instruction in an XR service, the second information is used to carry image update information in response to the gesture control; if the instruction information is an instruction sent to a robotic arm, the second information is used to carry the result of the robotic arm operation.

In some embodiments, the second information is information obtained based on processing the first downlink data, the processing including demodulation and/or decoding. In one example, the second information is information obtained after decoding the first downlink data. In another example, the second information is information obtained after demodulating the channel carrying the first downlink data. In another example, the second information is information obtained after demodulating and decoding the channel carrying the first downlink data. Exemplarily, the second information may be Acknowledgment (ACK), Negative-Acknowledgment (NACK), or information generated during the demodulation and/or decoding process. For instance, the second information may be the number of iterations.

In some embodiments, the second information is measurement or prediction information obtained based on the first downlink data. Exemplarily, the second information may be information obtained by performing channel state measurement, interference measurement, sensing measurement, or measurement or prediction based on a specific algorithm or model on the first downlink data.

In some embodiments, the above sensing measurement refers to a process of directly or indirectly obtaining sensing information of a target or environment based on at least one of sensing signals such as sound waves, electromagnetic waves, and light waves (including but not limited to lasers). Exemplarily, by sending and receiving sensing signals, and measuring or otherwise processing the sensing signals, sensing information of the sensing target or environment is obtained, to implement services such as positioning, ranging, velocity measurement, angle measurement, target imaging, target detection, target tracking, and target recognition.

In some embodiments, the above specific algorithm or model may be an AI (Artificial Intelligence)-based algorithm or model, or a neural network-based algorithm or model. In some embodiments, the neural network includes but is not limited to one or more of a convolutional neural network, a recurrent neural network, a fully connected neural network, a residual neural network, and a transformer neural network structure.

In some embodiments, the second information or channel is preconfigured information or channel. In some embodiments, the second information or channel is configured by the network device through higher layer signaling. Exemplarily, the higher layer signaling configures a first channel and a second channel to appear in pairs, and unless transmission is interrupted due to special reasons, the terminal device sends or receives the second channel after receiving the first channel. Of course, the second information or channel may also be configured based on other methods, which is not limited in the present disclosure.

In some embodiments, the first indication information is used to indicate transmission parameters of at least one second information or channel. In some embodiments, the first indication information includes a first type and a second type.

In some embodiments, the number of bits of the first type of first indication information is a pre-determined first value. In some embodiments, the first value is specified by a protocol, or preconfigured by a network device, or determined according to the second information or channel.

In some embodiments, the number of bits of the second type of first indication information is a second value, and the second value is one of a plurality of candidate values. In some embodiments, the plurality of candidate values is determined based on the second information or channel.

In some embodiments, the number of bits may also be referred to as bit length, which is not limited in the present disclosure.

In some embodiments, one first type of first indication information may be used to indicate transmission parameters of at least one second information or channel, and one second type of first indication information may be used to indicate transmission parameters of at least one second information or channel.

In some embodiments, the first downlink data may include at least one first type of first indication information, and/or at least one second type of first indication information.

According to the technical solution provided by the embodiments of the present disclosure, by carrying, in downlink data, the first indication information used to indicate transmission parameters of the second information or channel, the terminal device does not need to perform additional blind detection on the downlink control channel, which reduces reception complexity and effectively reduces the power consumption of the terminal device.

In some embodiments, the first indication information includes a first type and a second type. Regarding the first indication information, the first type of first indication information, and the second type of first indication information, the embodiments of the present disclosure also provide exemplary design solutions.

### I. First Indication Information

In some embodiments, the first downlink data includes at least one first type of first indication information, and/or at least one second type of first indication information.

In some embodiments, the first type of first indication information and/or the second type of first indication information are directly carried in the first downlink data. In some embodiments, the first downlink data includes the first type of first indication information, and/or the second type of first indication information. In some embodiments, the first downlink data includes at least one first type of first indication information, and/or at least one second type of first indication information.

In some embodiments, the first type of first indication information and/or the second type of first indication information may be carried in indication information, and the indication information is carried in the first downlink data.

In some embodiments, the first indication information includes at least one of the following transmission parameters: Modulation and Coding Scheme (MCS), time-frequency domain resource allocation information, precoding information, power control information, Hybrid Automatic Repeat reQuest (HARQ) process information, new data indicator information, and redundancy version information.

In some embodiments, the transmission parameters corresponding to the second information or channel may have a plurality of combination modes, and different combination modes correspond to different numbers of bits.

In some embodiments, different combination modes of transmission parameters corresponding to the second information or channel may lead to different contents included in the first indication information. The content included in the first indication information may also be referred to as the combination mode corresponding to the first indication information, the combination mode of transmission parameters included (or indicated) in the first indication information, the format of the first indication information, the combination mode of transmission parameters corresponding to the second information or channel, etc., which is not limited in the present disclosure.

### II. First Type of First Indication Information

In some embodiments, the number of bits of the first type of first indication information is a pre-determined first value. In some embodiments, the first value is pre-determined but not fixed.

In some embodiments, the first value is specified by a protocol, or preconfigured by a network device, or determined according to the second information or channel.

In some embodiments, the first value may be determined based on the second information or channel.

Exemplarily, if the second channel is PUSCH, the first value is value 1; if the second channel is PUCCH, the first value is value 2; and if the second channel is PDSCH, the first value is value 3.

In some embodiments, the first value is specified by a protocol. Exemplarily, the protocol stipulates that when a first condition is met, the first value is value 1; when a second condition is met, the first value is value 2. In some embodiments, the first condition and the second condition may be set based on the second information or channel. For example, the first condition is that the second information or channel is uplink information or channel, and the second condition is that the second information or channel is downlink information or channel.

In some embodiments, the first value is preconfigured by a network device. In some embodiments, the first value may be preconfigured by the network device through higher layer signaling. Exemplarily, the network device preconfigures the first value through RRC.

In some embodiments, the content included in the first type of first indication information is specified by a protocol, or preconfigured by a network device, or determined according to the second information or channel.

In some embodiments, the first type of first indication information includes at least one of the following transmission parameters: MCS, time-frequency domain resource allocation information, precoding information, power control information, HARQ process information, new data indicator information, or redundancy version information.

In some embodiments, for different types of second information or channels, the content included in the corresponding first type of first indication information may be the same or different, which is not limited in the present disclosure.

In some embodiments, the content included in the first type of first indication information refers to the information fields or fields included in the first type of first indication information, not the values corresponding to these information fields or fields. In some embodiments, the values corresponding to these information fields or fields are determined based on the actual situation of the second information or channel to be transmitted.

In some embodiments, the combination mode or format of the first type of first indication information is specified by a protocol, or preconfigured by a network device, or determined according to the second information or channel.

In some embodiments, there are a plurality of combination modes for the transmission parameters corresponding to the second information or channel.

In some embodiments, the second information or channel is at least one of the following: downlink data information or channel, uplink feedback information or channel, uplink control information or channel, or uplink data information or channel.

In some embodiments, the downlink data channel is used to transmit downlink data. Exemplarily, the downlink data channel is PDSCH. In some embodiments, the uplink data channel is used to transmit uplink data. Exemplarily, the uplink data channel is PUSCH. In some embodiments, the uplink feedback channel is used to transmit uplink feedback information. Exemplarily, the uplink feedback channel is called PDFCH. In some embodiments, the uplink control channel is used to transmit uplink control information. Exemplarily, the uplink control channel is PUCCH.

In some embodiments, one combination mode among the plurality of combination modes includes: a transmission parameter combination mode for indicating a downlink data channel; or a transmission parameter combination mode for indicating an uplink feedback channel; or a transmission parameter combination mode for indicating an uplink control channel; or a transmission parameter combination mode for indicating an uplink data channel.

In some embodiments, the combination mode refers to the combination mode of the content included in the first indication information. Exemplarily, one combination mode is that the first type of first indication information includes MCS, time-frequency domain resource allocation information, and precoding information; another combination mode is that the first type of first indication information includes MCS, time-frequency domain resource allocation information, redundancy version information, and new data indicator information.

In some embodiments, the first value is determined based on a plurality of numbers of bits, there are a plurality of combination modes for the transmission parameters corresponding to the second information or channel, and the number of bits corresponding to one combination mode among the plurality of combination modes is a number of bits among the plurality of numbers of bits.

In some embodiments, the plurality of numbers of bits are different. In some embodiments, the number of bits corresponding to a combination mode refers to the number of bits required to transmit the transmission parameters included in that combination mode.

In some embodiments, the numbers of bits corresponding to any two combination modes among the plurality of combination modes may be the same or different, which is not limited in the present disclosure. Exemplarily, the number of bits corresponding to combination mode 1 may be the same as or different from the number of bits corresponding to combination mode 2.
1. Precisely setting the corresponding first type of first indication information for the second information or channel to be transmitted

In some embodiments, the transmission parameters corresponding to the second information or channel are of a first combination mode, and the first value is the number of bits corresponding to the first combination mode.

In some embodiments, for the case where there is an association relationship between the second information or channel and the first downlink data, or in other words, when the terminal device knows clearly that the second information or channel will be transmitted after receiving the first downlink data, the terminal device, upon receiving the first downlink data, already clearly knows the transmission parameters required for transmitting the second information or channel, and the first type of first indication information is used to indicate the above transmission parameters. Therefore, the content included in the first type of first indication information can be determined based on the second information or channel to be transmitted, meaning that the number of bits corresponding to the first type of first indication information can also be determined based on the second information or channel to be transmitted.

In some embodiments, in the above case, the content included in the first type of first indication information, or the combination mode of transmission parameters included in the first type of first indication information, is specifically set for the second information or channel without redundant information, and the first value is also determined based on the content included in the first type of first indication information or the combination mode or format corresponding to the first type of first indication information, without remaining bits.

Since the number of blind detections is proportional to the number of information contents (or information formats) to be detected and the number of possible transmission resources. The advantage of detecting for a determined content is that the terminal device can reduce the number of blind detections, or even avoid blind detection.

However, in this case, it is necessary to precisely know the association relationship between the first downlink data and the second information or channel. However, the association relationship itself may be time-varying. Exemplarily, the first downlink data is carried on a first downlink channel, the first downlink channel is PDSCH, its corresponding second channel is PUCCH at time t1, PUSCH at time t2, and PDSCH at time t3. Therefore, to achieve precise configuration of the content included in each first type of first indication information, the combination mode or format corresponding to the first type of first indication information, and the first value, the overhead of pre-configuration signaling in the early stage will be relatively large. Additionally, the actual transmitted service itself may not have the characteristic of a relatively stable association relationship, so the above method may have limitations in application.

2. The number of bits of the first type of first indication information corresponding to different second information or channels is the same

In some embodiments, the first value is greater than or equal to a number of bits among the plurality of numbers of bits. In some embodiments, the first value is greater than or equal to any a number of bits among the plurality of numbers of bits.

In some embodiments, the first value is greater than or equal to each of the plurality of numbers of bits. In some embodiments, the first value is greater than or equal to the maximum value among the plurality of numbers of bits.

In some embodiments, different second information or channels correspond to different contents included in the first type of first indication information, or different combination modes of transmission parameters correspond to different second information or channels, resulting in different numbers of bits of the first type of first indication information corresponding to different second information or channels. Exemplarily, the first downlink data is carried on a first downlink channel, the first downlink channel is PDSCH, and its corresponding second channel may be PUCCH, PUSCH, or PDSCH. When the second channel is different, the content included in the corresponding first type of first indication information, or the combination mode of the corresponding transmission parameters, is different, leading to different numbers of bits of the corresponding first type of first indication information.

In some embodiments, the content included in the first type of first indication information corresponding to different second information or channels being different means that the content included in the first type of first indication information corresponding to different second information or channels is not completely the same, and there may be identical parts between them. Exemplarily, if the second channel is PDSCH or PUSCH, the first type of first indication information corresponding to the second channel may include time-frequency domain resource configuration information, MCS, HARQ process information, redundancy version information, precoding information, and power control information. If the second channel is PUCCH, the first type of first indication information corresponding to the second channel may include resource information, power control information, and padding information.

In some embodiments, in the above case, the plurality of numbers of bits are aligned to obtain the first value. The first value is greater than or equal to the maximum value among the plurality of numbers of bits.

In some embodiments, when the number of bits corresponding to a first combination mode among the plurality of combination modes is less than the first value, the first type of first indication information includes the transmission parameters corresponding to the first combination mode and padding information, and the sum of the padding information and the number of bits corresponding to the first combination mode equals the first value.

In some embodiments, when the number of bits corresponding to a first combination mode among the plurality of combination modes is less than the first value, padding information is added to the first type of first indication information so that the number of bits corresponding to the transmitted first type of first indication information equals the first value.

In some embodiments, the effective number of bits of the actually transmitted first type of first indication information may be less than the first value, so padding can be performed on the actually transmitted first type of first indication information, i.e., introducing padding information, so that the length of the padded first type of first indication information equals the first value.

In some embodiments, the effective number of bits of the actually transmitted first type of first indication information refers to the minimum number of bits required for the first type of first indication information to indicate the transmission parameters of the corresponding second information or channel, or the minimum number of bits required for the content included in the first type of first indication information.

In some embodiments, the padding information may be determined based on the content included in the first type of first indication information, or may be determined based on other methods, which is not limited in the present disclosure.

In some embodiments, one first type of first indication information may be used to indicate transmission parameters of at least one second information or channel. In some embodiments, the number of bits corresponding to the first type of first indication information used to indicate transmission parameters of multiple second information or channels, and the number of bits corresponding to the first type of first indication information used to indicate transmission parameters of one second information or channel, are both the first value.

The advantage of the above method is that it can support a more flexible scheduling relationship without introducing blind detection, i.e., the second information or channel can have multiple options. However, the transmission overhead of the first type of first indication information is not the most streamlined.

### III. Second Type of First Indication Information

In some embodiments, the number of bits of the second type of first indication information is a second value, and the second value is one of a plurality of candidate values.

In some embodiments, the second value is dynamically changed.

In some embodiments, the plurality of candidate values is determined based on the second information or channel indicated by the second type of first indication information.

In some embodiments, there are a plurality of combination modes for the transmission parameters corresponding to the second information or channel, the second type of first indication information corresponds to one of the plurality of combination modes, and a number of bits corresponding to one combination mode among the plurality of combination modes is one of the plurality of candidate values.
1. The number of bits of different second types of first indication information may be different

In some embodiments, the numbers of bits corresponding to any two combination modes among the plurality of combination modes may be the same or different, which is not limited in the present disclosure. Exemplarily, the number of bits corresponding to a first combination mode may be the same as or different from the number of bits corresponding to a second combination mode.

In some embodiments, the plurality of candidate values is determined based on the numbers of bits respectively corresponding to the plurality of combination modes. Exemplarily, combination mode 1 corresponds to the first number of bits, a second combination mode corresponds to the second number of bits, and a third combination mode corresponds to the third number of bits. If the first number of bit, the second number of bits, and the third number of bits are all different, the plurality of candidate values includes the first number of bit, the second number of bits, and the third number of bits; if the first number of bits and the second number of bits are the same, the plurality of candidate values includes the first number of bits (the second number of bits) and the third number of bits.

In some embodiments, different second types of first indication information correspond to different second information or channels, have different contents, or have different combination modes of included transmission parameters, or have different corresponding formats, resulting in different numbers of bits corresponding to different second types of first indication information. In this method, there is no need to align the numbers of bits respectively corresponding to different second types of first indication information. If the second type of first indication information corresponds to a first combination mode, then the number of bits corresponding to this second type of first indication information is the number of bits corresponding to the first combination mode. The second type of first indication information corresponding to the first combination mode means that the transmission parameters of the second information or channel indicated by the second type of first indication information are of the first combination mode.

In some embodiments, the content included in different second types of first indication information being different means that the content included in different second types of first indication information is not completely the same, and there may be identical parts between them. Exemplarily, if the second channel is PDSCH or PUSCH, the second type of first indication information corresponding to the second channel may include time-frequency domain resource configuration information, MCS, HARQ process information, redundancy version information, precoding information, and power control information. If the second channel is PUCCH, the second type of first indication information corresponding to the second channel may include time-frequency resource configuration information, power control information, and padding information.

In the above method, using a dynamically changing second value can reduce the transmission overhead of the second type of first indication information, i.e., sending necessary indication information in sequence, but it requires the terminal device to perform blind detection on the second type of first indication information.

2. Using combination mode indication information to indicate the second type of first indication information

In some embodiments, combination mode indication information is used to indicate or determine the combination mode of transmission parameters included in the second type of first indication information and/or the number of bits of the second type of first indication information.

In some embodiments, the combination mode indication information may also be referred to as format indication information, content indication information, etc., which is not limited in the present disclosure.

In some embodiments, the first type of first indication information includes combination mode indication information.

In some embodiments, if the first indication information includes the second type of first indication information, a combination mode indication information field may be set in the first type of first indication information, wherein the combination mode indication information field is used to indicate or determine the combination mode of transmission parameters included in the second type of first indication information and/or the number of bits of the second type of first indication information.

In some embodiments, the second indication information used to indicate the first downlink data includes combination mode indication information.

In some embodiments, the second indication information may be the first type of first indication information carried in a downlink information or channel having an association relationship with the first downlink data. Exemplarily, as shown in FIG. 3, the first indication information (DCI) carried in PDSCH2 is used to indicate transmission parameters of PDSCH3, and the first type of first indication information included in this first indication information includes combination mode indication information, wherein the combination mode information is used to indicate or determine the combination mode of transmission parameters included in the second type of first indication information (DCI) carried in PDSCH3 and/or the number of bits of the second type of first indication information.

In some embodiments, the second indication information may be downlink control information used to indicate the first downlink data. Exemplarily, the second indication information may be DCI transmitted on PDCCH, wherein the DCI is used to indicate transmission parameters of the first downlink data.

Of course, the second indication information may also be other indication information, such as higher layer signaling used to indicate the first downlink data, which is not limited in the present disclosure.

Through the above method, the terminal device does not need to perform blind detection on the second type of first indication information, but the reception of the second type of first indication information depends on the correct reception of other information (the first type of first indication information and/or the second indication information), thus easily causing error propagation.

Regarding the mapping method between the first downlink data and the first indication information, the present disclosure also provides exemplary embodiments.

In some embodiments, the first indication information and the first downlink information are mapped onto different physical resources for transmission.

In some embodiments, the first indication information and the first downlink information are encoded and then mapped onto different physical resources for transmission.

In some embodiments, the first indication information and the first downlink information are independently encoded and then respectively mapped onto different physical resources for transmission, i.e., the first indication information and the first downlink information are encoded and mapped separately.

### I. Mapping of First Indication Information

### 1. Rate matching for the first indication information

In some embodiments, the number of encoded bits corresponding to the first indication information is determined based on at least one of the following parameters: a coding rate of the first downlink data, a coding rate of the first indication information, a coding rate offset value of the first indication information, the number of bits of the first indication information, a modulation order of the first indication information, or a modulation order of the first downlink data.

In some embodiments, the above first indication information may be the first type of first indication information or the second type of first indication information, which is not limited in the present disclosure.

In some embodiments, the number of encoded bits corresponding to the first indication information may also be referred to as the number of bits corresponding to the first indication information, which is not limited in the present disclosure. Similarly, the number of encoded bits corresponding to the first type of first indication information may also be referred to as the number of bits corresponding to the first type of first indication information; the number of encoded bits corresponding to the second type of first indication information may also be referred to as the number of bits corresponding to the second type of first indication information.

In some embodiments, the coding rate of the first downlink data is denoted by r0, and the coding rate of the first downlink data can be calculated in various ways. Exemplarily, $r 0 = \frac{data amount}{physical resource \times modulation order}$. Here, the data amount is the number of bits of the data to be transmitted (the first downlink data), or the number of bits of the data to be transmitted after adding Cyclic Redundancy Check (CRC). The physical resources are the number of physical resources available for data transmission in the channel carrying the first downlink data, i.e., the number of physical resources after removing physical resources occupied by reference signals and/or resources occupied by other overhead.

In some embodiments, the coding rate of the first indication information is denoted by r1. In some embodiments, the coding rate offset value of the first indication information is denoted by *beta1.* The coding rate offset value of the first indication information refers to the offset value of the coding rate of the first indication information relative to the coding rate of the first downlink data.

In some embodiments, the number of bits of the first indication information is denoted by T.

In some embodiments, the number of encoded bits of the first indication information can be calculated in various ways.

Exemplarily, the number of encoded bits of the first indication information is $\left⌈\frac{T}{r 1 \times Q}\right⌉ \times Q$, or the number of encoded bits of the first indication information is $\left⌈\frac{T}{r 1}\right⌉$. Exemplarily, the number of encoded bits of the first indication information is determined based on $\frac{T}{r 1 \times Q}$ or $\frac{T}{r 1}$, that is, $\frac{T}{r 1 \times Q}$ or $\frac{T}{r 1}$ is part of the algorithm for determining the number of encoded bits of the first indication information. Here, Q is the modulation order (which may be the modulation order of the first indication information or the modulation order of the first downlink data).

Exemplarily, the number of encoded bits of the first indication information is $\left⌈\frac{T \times beta 1}{r 0 \times Q}\right⌉ \times Q$, or the number of encoded bits of the first indication information is $\left⌈\frac{T}{r 0 \times beta 1 \times Q}\right⌉ \times Q$, or the number of encoded bits of the first indication information is $\left⌈\frac{T}{\left(r0+beta1\right) \times Q}\right⌉ \times Q$. Here, *Q* is the modulation order (which may be the modulation order of the first indication information or the modulation order of the first downlink data).

In some embodiments, if the first downlink data includes the first type of first indication information and the second type of first indication information, the numbers of encoded bits corresponding to the first type of first indication information and the second type of first indication information are determined respectively.

In some embodiments, the number of encoded bits corresponding to the first type of first indication information is determined based on at least one of the following parameters: a coding rate of the first downlink data, a coding rate of the first type of first indication information, a coding rate offset value of the first type of first indication information, the number of bits of first indication information of the first type, a modulation order of the first downlink data, or a modulation order of the first type of first indication information.

In some embodiments, the coding rate of the first downlink data is denoted by *r0*, and the coding rate of the first downlink data can be calculated in various ways. Exemplarily, $r 0 = \frac{data amount}{physical resource \times modulation order}$. Here, the data amount is the number of bits of the data to be transmitted (the first downlink data), or the number of bits of the data to be transmitted after adding CRC. The physical resources are the number of physical resources available for data transmission in the channel carrying the first downlink data, i.e., the number of physical resources after removing physical resources occupied by reference signals and/or resources occupied by other overhead.

In some embodiments, the coding rate of the first type of first indication information is denoted by *r2.* In some embodiments, the coding rate offset value of the first type of first indication information is denoted by *beta2.* The coding rate offset value of the first type of first indication information refers to the offset value of the coding rate of the first type of first indication information relative to the coding rate of the first downlink data.

In some embodiments, the number of bits of the first type of first indication information is denoted by *T*.

In some embodiments, the number of encoded bits of the first type of first indication information can be calculated in various ways.

Exemplarily, the number of encoded bits of the first type of first indication information is $\left⌈\frac{T}{r 2 \times Q}\right⌉ \times Q$, or the number of encoded bits of the first type of first indication information is $\left⌈\frac{T}{r 2}\right⌉$. Exemplarily, the number of encoded bits of the first type of first indication information is determined based on $\frac{T}{r 2 \times Q}$ or $\frac{T}{r 2}$, that is, $\frac{T}{r 2 \times Q}$ or $\frac{T}{r 2}$ is part of the algorithm for determining the number of encoded bits of the first type of first indication information. Here, *Q* is the modulation order (which may be the modulation order of the first type of first indication information or the modulation order of the first downlink data).

Exemplarily, the number of encoded bits of the first type of first indication information is $\left⌈\frac{T \times beta 2}{r 0 \times Q}\right⌉ \times Q$, or the number of encoded bits of the first type of first indication information is $\left⌈\frac{T}{r 0 \times beta 2 \times Q}\right⌉ \times Q$, or the number of encoded bits of the first type of first indication information is $\left⌈\frac{T}{r 0 \times beta 2 \times Q}\right⌉ \times Q$. Here, *Q* is the modulation order (which may be the modulation order of the first type of first indication information or the modulation order of the first downlink data).

In some embodiments, the number of encoded bits corresponding to the second type of first indication information is determined based on at least one of the following parameters: a coding rate of the first downlink data, a coding rate of the second type of first indication information, a coding rate offset value of the second type of first indication information, the number of bits of first indication information of the second type, a modulation order of the first downlink data, or a modulation order of the second type of first indication information.

In some embodiments, the coding rate of the first downlink data is denoted by *r0*, and the coding rate of the first downlink data can be calculated in various ways. Exemplarily, $r 0 = \frac{data amount}{physical resource \times modulation order}$. Here, the data amount is the number of bits of the data to be transmitted (the first downlink data), or the number of bits of the data to be transmitted after adding CRC. The physical resources are the number of physical resources available for data transmission in the channel carrying the first downlink data, i.e., the number of physical resources after removing physical resources occupied by reference signals and/or resources occupied by other overhead.

In some embodiments, the coding rate of the second type of first indication information is denoted by *r3.* In some embodiments, the coding rate offset value of the second type of first indication information is denoted by *beta3.* The coding rate offset value of the second type of first indication information refers to the offset value of the coding rate of the second type of first indication information relative to the coding rate of the first downlink data.

In some embodiments, the number of bits of the second type of first indication information is denoted by *T*.

In some embodiments, the number of encoded bits of the second type of first indication information can be calculated in various ways.

Exemplarily, the number of encoded bits of the second type of first indication information is $\left⌈\frac{T}{r 3 \times Q}\right⌉ \times Q$, or the number of encoded bits of the second type of first indication information is $\left⌈\frac{T}{r 3}\right⌉$. Exemplarily, the number of encoded bits of the second type of first indication information is determined based on $\frac{T}{r 3 \times Q}$ or $\frac{T}{r 3}$, i.e., $\frac{T}{r 3}$ or $\frac{T}{r 1}$ is part of the algorithm for determining the number of encoded bits of the second type of first indication information. Here, *Q* is the modulation order (which may be the modulation order of the second type of first indication information or the modulation order of the first downlink data).

Exemplarily, the number of encoded bits of the second type of first indication information is $\left⌈\frac{T \times beta 3}{r 0 \times Q}\right⌉ \times Q$, or the number of encoded bits of the second type of first indication information is $\left⌈\frac{T}{r 0 \times beta 3 \times Q}\right⌉ \times Q$, or the number of encoded bits of the second type of first indication information is $\left⌈\frac{T}{\left(r0+beta3\right) \times Q}\right⌉ \times Q$. Here, *Q* is the modulation order (which may be the modulation order of the second type of first indication information or the modulation order of the first downlink data).

### 2. Resource mapping for the first indication information

### 2.1. Mapping positions of the first indication information and the first downlink data

In some embodiments, the position of the physical resources for transmitting the first indication information may be configured by the network device to the terminal device through higher layer signaling or physical layer signaling, or may be determined according to agreed rules.

If the physical resources for transmitting the first indication information are determined according to agreed rules, the terminal device can determine the position of the physical resources for transmitting the first indication information according to the agreed rules, thus reducing the number of blind detections by the terminal device, or avoiding blind detection, without relying on additional information.

In some embodiments, the agreed rules may be predefined in a protocol, or preconfigured by a network device, which is not limited in the present disclosure.

In some embodiments, the agreed rules may include one or more of the following types:
(1) The time domain position where the first indication information is mapped is before the time domain position where the first downlink data is mapped.
   In some embodiments, the first indication information is mapped before the time domain position where the first downlink data is mapped, so that the first indication information can be received by the terminal device as soon as possible, meeting the delay requirement between the first indication information and the second information or channel.
(2) The first indication information is mapped at a position adjacent or close to a demodulation reference signal of a channel carrying the first downlink data.

In some embodiments, the first indication information may be mapped at a position adjacent to the demodulation reference signal of the channel carrying the first downlink data.

In some embodiments, if the position adjacent to the above demodulation reference signal is mapped with other information or data, the first indication information may be mapped at a position close to the demodulation reference signal. The close position refers to the position closest to the demodulation reference signal, excluding physical resources occupied by other information or data.

In some embodiments, if there is other information or data desired to be mapped at a position adjacent to the demodulation reference signal, the mapping positions of the other information or data and the first indication information are determined according to the priorities of the other information or data and the first indication information. The other information or data refers to information or data other than the first indication information.

Mapping the first indication information at a position adjacent or close to the demodulation reference signal can ensure the reliability requirement of the first indication information.

(3) The time domain position where the first indication information is mapped is after the time domain position where the first downlink data is mapped.

In some embodiments, since the first indication information is used to indicate subsequent information or channel, its delay requirement is relatively loose compared to the first downlink data. In this case, the first downlink data may be mapped first to prioritize meeting the delay requirement of the first downlink data.

In some embodiments, the first indication information in the above embodiments regarding the mapping positions of the first indication information and the first downlink data may all be replaced with the first type of first indication information and/or the second type of first indication information.

In some embodiments, if the physical resources for transmitting the first indication information are determined according to agreed rules, the agreed rules corresponding to the first type of first indication information and the agreed rules corresponding to the second type of first indication information may be the same or different, which is not limited in the present disclosure. Exemplarily, both the first type of first indication information and the second type of first indication information correspond to the above agreed rule (1). Exemplarily, the first type of first indication information corresponds to the above agreed rule (1), and the second type of first indication information corresponds to the above agreed rule (2).

### 2.2. Mapping positions of the first type of first indication information and the second type of first indication information

In some embodiments, the first type of first indication information and the second type of first indication information are respectively mapped onto different physical resources.

In some embodiments, when the first downlink data includes the first type of first indication information and the second type of first indication information, the encoded information of the first type of first indication information and the encoded information of the second type of first indication information are respectively mapped onto different physical resources.

In some embodiments, the encoded information of the first type of first indication information is mapped first, and then the encoded information of the second type of first indication information is mapped.

In some embodiments, when the first downlink data includes the first type of first indication information and the second type of first indication information, the encoded information of the first type of first indication information and the encoded information of the second type of first indication information are concatenated and then mapped onto physical resources.

In some embodiments, the first type of first indication information and the second type of first indication information are concatenated in the order of the first type of first indication information first, followed by the second type of first indication information, and then mapped onto physical resources.

(1) Sorting physical resources in a time-domain-first-then-frequency-domain order, the physical resources occupied by the first type of first indication information precede the physical resources occupied by the second type of first indication information.

In some embodiments, the time domain index of the physical resources occupied by the first type of first indication information is smaller than the time domain index of the physical resources occupied by the second type of first indication information. The time domain index refers to the encoding of time domain resources when sorting physical resources.

In some embodiments, the time domain index of the physical resources occupied by the first type of first indication information being smaller than the time domain index of the physical resources occupied by the second type of first indication information means that the time domain resources occupied by the first type of first indication information precede the time domain resources occupied by the second type of first indication information.

In some embodiments, the time domain index of the physical resources occupied by the first type of first indication information is the same as the time domain index of the physical resources occupied by the second type of first indication information, and the frequency domain index of the physical resources occupied by the first type of first indication information is smaller than the frequency domain index of the physical resources occupied by the second type of first indication information. The frequency domain index refers to the encoding of frequency domain resources when sorting physical resources.

In some embodiments, the first type of first indication information and the second type of first indication information occupy the same time domain resources, but the frequency resources occupied by the first type of first indication information precede the frequency domain resources occupied by the second type of first indication information.

(2) Sorting physical resources in a frequency-domain-first-then-time-domain order, the physical resources occupied by the first type of first indication information precede the physical resources occupied by the second type of first indication information.

In some embodiments, the frequency domain index of the physical resources occupied by the first type of first indication information is smaller than the frequency domain index of the physical resources occupied by the second type of first indication information.

In some embodiments, the frequency domain index of the physical resources occupied by the first type of first indication information being smaller than the frequency domain index of the physical resources occupied by the second type of first indication information means that the frequency domain resources occupied by the first type of first indication information precede the frequency domain resources occupied by the second type of first indication information.

In some embodiments, the frequency domain index of the physical resources occupied by the first type of first indication information is the same as the frequency domain index of the physical resources occupied by the second type of first indication information, and the time domain index of the physical resources occupied by the first type of first indication information is smaller than the time domain index of the physical resources occupied by the second type of first indication information.

In some embodiments, the first type of first indication information and the second type of first indication information occupy the same frequency domain resources, but the time domain resources occupied by the first type of first indication information precede the time domain resources occupied by the second type of first indication information.

In some embodiments, the number of physical resources occupied by the first indication information is determined based on at least one of the following parameters: a coding rate of the first downlink data, a coding rate of the first indication information, a coding rate offset value of the first indication information, the number of bits of the first indication information, a modulation order of the first downlink data, or a modulation order of the first indication information.

In some embodiments, the coding rate of the first downlink data is denoted by *r0*, and the coding rate of the first downlink data can be calculated in various ways. Exemplarily, $r 0 = \frac{data amount}{physical resource \times modulation order}$. Here, the data amount is the number of bits of the data to be transmitted (the first downlink data), or the number of bits of the data to be transmitted after adding CRC. The physical resources are the number of physical resources available for data transmission in the channel carrying the first downlink data, i.e., the number of physical resources after removing physical resources occupied by reference signals and/or resources occupied by other overhead.

In some embodiments, the coding rate of the first indication information is denoted by *r1.* In some embodiments, the coding rate offset value of the first indication information is denoted by *beta1.* The coding rate offset value of the first indication information refers to the offset value of the coding rate of the first indication information relative to the coding rate of the first downlink data.

In some embodiments, the number of bits of the first indication information is denoted by T.

In some embodiments, the number of physical resources occupied by the first indication information can be calculated in various ways.

Exemplarily, the number of physical resources occupied by the first indication information is $\left⌈\frac{T}{r 1 \times Q}\right⌉ \times Q$, or the number of physical resources occupied by the first indication information is $\left⌈\frac{T}{r 1}\right⌉$. Exemplarily, the number of physical resources occupied by the first indication information is determined based on $\frac{T}{r 1 \times Q}$ or $\frac{T}{r 1}$, that is, $\frac{T}{r 1 \times Q}$ or $\frac{T}{r 1}$ is part of the algorithm for determining the number of physical resources occupied by the first indication information. Here, *Q* is the modulation order (which may be the modulation order of the first indication information or the modulation order of the first downlink data).

Exemplarily, the number of physical resources occupied by the first indication information is $\left⌈\frac{T \times beta 1}{r 0 \times Q}\right⌉ \times Q$, or the number of physical resources occupied by the first indication information is $\left⌈\frac{T}{r 0 \times beta 1 \times Q}\right⌉ \times Q$, or the number of physical resources occupied by the first indication information is $\left⌈\frac{T}{\left(r0+beta1\right) \times Q}\right⌉ \times Q$. Here, *Q* is the modulation order (which may be the modulation order of the first indication information or the modulation order of the first downlink data).

In some embodiments, the number of physical resources occupied by the first type of first indication information is determined based on at least one of the following parameters: a coding rate of the first downlink data, a coding rate of the first type of first indication information, a coding rate offset value of the first type of first indication information, the number of bits of first indication information of the first type, a modulation order of the first downlink data, or a modulation order of the first type of first indication information.

In some embodiments, the number of physical resources occupied by the second type of first indication information is determined based on at least one of the following parameters: a coding rate of the first downlink data, a coding rate of the second type of first indication information, a coding rate offset value of the second type of first indication information, the number of bits of first indication information of the second type, a modulation order of the first downlink data, or a modulation order of the second type of first indication information.

The methods for calculating the number of physical resources occupied by the first type of first indication information and the second type of first indication information may refer to the above method for calculating the number of physical resources occupied by the first indication information, which will not be described repeatedly in the present disclosure.

In some embodiments, the above physical resources are at least one of the following: time domain resources, frequency domain resources, or spatial domain resources.

In some embodiments, the above physical resources may also be at least one of the following: time domain symbols, subcarriers, physical resource blocks, resource elements, or antenna ports.

By mapping the first indication information through the above method, resource configuration in the downlink data channel becomes more flexible, capable of supporting more coding rate and precoding scheme options, and adaptable to various reliability requirements.

### II. Mapping of First Downlink Data

### 1. Rate matching for the first downlink information

In some embodiments, the number of encoded bits of the first downlink data is determined based on at least one of the following parameters: the number of encoded bits of the first indication information, the number of encoded bits of the first type of first indication information, and the number of encoded bits carried by a channel; wherein the number of encoded bits carried by the channel is determined based on the number of physical resources of the channel carrying the first downlink data and a modulation order, or the number of physical resources of the channel carrying the first downlink data is the number of unoccupied physical resources.

In some embodiments, the number of encoded bits of the first downlink data is determined based on a first parameter. In some embodiments, the first parameter is determined based on at least one of the following parameters: the number of encoded bits of the first indication information, the number of encoded bits of the first type of first indication information, or the number of encoded bits carried by a channel; wherein the number of encoded bits carried by the channel is determined based on the number of physical resources of the channel carrying the first downlink data and a modulation order, and the number of physical resources of the channel carrying the first downlink data is the number of unoccupied physical resources.

In some embodiments, the first parameter is *Nₜₒₜₐₗ* - *N*₁. Here, *Nₜₒₜₐₗ* represents the number of encoded bits carried by the channel, and *N*₁ represents the number of encoded bits of the first indication information (including the first type of first indication information and the second type of first indication information); or *N*₁ represents the number of encoded bits of the first type of first indication information.

In some embodiments, the number of encoded bits carried by the channel is determined based on the number of physical resources of the channel carrying the first downlink data and the modulation order.

In some embodiments, the number of physical resources of the channel carrying the first downlink data is the number of unoccupied physical resources.

In some embodiments, the unoccupied physical resources include at least one of the following: physical resources not occupied by the first indication information (including the first type of first indication information and the second type of first indication information), physical resources not occupied by the first type of first indication information, physical resources not occupied by the second type of first indication information, or physical resources not occupied by the demodulation reference signal.

In some embodiments, the number of encoded bits of the first downlink data is determined based on at least one of the following parameters: the number of physical resources occupied by the first indication information, the number of physical resources occupied by the first type of first indication information, or the number of physical resources of the channel carrying the first downlink data, wherein the number of physical resources of the channel carrying the first downlink data is the number of unoccupied physical resources.

In some embodiments, the number of encoded bits of the first downlink data is determined based on a first parameter. In some embodiments, the first parameter is determined based on at least one of the following parameters: the number of physical resources occupied by the first indication information, the number of physical resources occupied by the first type of first indication information, or the number of physical resources of the channel carrying the first downlink data, wherein the number of physical resources of the channel carrying the first downlink data is the number of unoccupied physical resources.

In some embodiments, the first parameter is *Nₜₒₜₐₗ - N*₁*.* Here, *Nₜₒₜₐₗ* represents the number of physical resources of the channel carrying the first downlink data, and *N*₁ represents the number of physical resources occupied by the first indication information (including the first type of first indication information and the second type of first indication information); or *N*₁ represents the number of physical resources occupied by the first type of first indication information.

In some embodiments, the number of physical resources of the channel carrying the first downlink data is the number of unoccupied physical resources.

In some embodiments, the unoccupied physical resources include at least one of the following: physical resources not occupied by the first indication information (including the first type of first indication information and the second type of first indication information), physical resources not occupied by the first type of first indication information, physical resources not occupied by the second type of first indication information, or physical resources not occupied by the demodulation reference signal.

### 2. Resource mapping for the first downlink information

In some embodiments, the first downlink data is mapped onto physical resources not occupied by the first indication information.

In some embodiments, the first downlink data is mapped onto physical resources not occupied by the first type of first indication information and the second type of first indication information.

In some embodiments, the first downlink data is mapped onto physical resources not occupied by the first type of first indication information.

That is, when performing rate matching and resource mapping for the first downlink data, the influence of the second type of first indication information may not be considered.

In some embodiments, the second type of first indication information is mapped a puncturing manner.

In some embodiments, if the influence of the second type of first indication information is not considered when performing resource mapping for the first downlink data, then after the mapping of the first downlink data is completed, the second type of first indication information may be remapped.

In some embodiments, if the influence of the second type of first indication information is considered when performing resource mapping for the first downlink data, then after the mapping of the first downlink data is completed, the second type of first indication information may not be remapped.

In some embodiments, the above physical resources not occupied by the first indication information or the first type of first indication information refer to available physical resources not occupied by the first indication information or the first type of first indication information. In other words, they refer to idle physical resources not occupied by the first indication information or the first type of first indication information. Alternatively, they refer to physical resources not occupied by the first indication information or the first type of first indication information or the demodulation reference signal.

By mapping the first downlink data through the above method, resource configuration in the downlink data channel becomes more flexible, capable of supporting more coding rate and precoding scheme options, and adaptable to various reliability requirements.

In the above method embodiments, the technical solution of the present disclosure is introduced and explained only from the perspective of interaction between a terminal device and a network device. The steps performed by the terminal device described above can be implemented independently as an information transmission method on the terminal device side, and the steps performed by the network device described above can be implemented independently as an information transmission method on the network device side. In addition, the embodiments provided herein can be arbitrarily combined to form new embodiments, which are all within the protection scope of the present disclosure.

The following are apparatus embodiments of the present disclosure, which can be used to execute the method embodiments of the present disclosure. For details not disclosed in the apparatus embodiments of the present disclosure, please refer to the method embodiments of the present disclosure.

Please refer to FIG. 4, which shows a block diagram of an information transmission apparatus provided by an embodiment of the present disclosure. The apparatus has the function of implementing the examples of the above information transmission method, and the function can be implemented by hardware, or by hardware executing corresponding software. The apparatus may be the first device introduced above, or may be provided in the first device. As shown in FIG. 4, the apparatus 400 may include: a receiving module 410.

The receiving module 410 is configured to receive first downlink data, wherein the first downlink data includes at least one first indication information, and the first indication information is used to indicate transmission parameters of at least one second information or channel.

In some embodiments, the second information or channel includes at least one of the following:
response information of the first downlink data;
information obtained based on processing the first downlink data, the processing including demodulation and/or decoding;
measurement or prediction information obtained based on the first downlink data; or
preconfigured information or channel having an association relationship with the first downlink data.

In some embodiments, the first indication information is of a first type or a second type, wherein the number of bits of first indication information of the first type is a pre-determined first value, and the number of bits of first indication information of the second type is a second value, the second value being one of a plurality of candidate values.

In some embodiments, the first indication information includes at least one of the following transmission parameters: Modulation and Coding Scheme MCS, time-frequency domain resource allocation information, precoding information, power control information, Hybrid Automatic Repeat reQuest HARQ process information, new data indicator information, or redundancy version information.

In some embodiments, the first value is determined based on a plurality of numbers of bits, there are a plurality of combination modes for the transmission parameters corresponding to the second information or channel, and a number of bits corresponding to one combination mode among the plurality of combination modes is a number of bits among the plurality of numbers of bits.

In some embodiments, the first value is greater than or equal to a number of bits among the plurality of numbers of bits.

In some embodiments, when a number of bits corresponding to a first combination mode among the plurality of combination modes is less than the first value, the first type of first indication information includes the transmission parameters corresponding to the first combination mode and padding information, and a sum of the padding information and the number of bits corresponding to the first combination mode equals the first value.

In some embodiments, the combination mode of transmission parameters included in the first type of first indication information is specified by a protocol, or preconfigured by a network device, or determined according to the second information or channel; or
the first value is specified by a protocol, or preconfigured by a network device, or determined according to the second information or channel.

In some embodiments, there are a plurality of combination modes for the transmission parameters corresponding to the second information or channel, the second type of first indication information corresponds to one of the plurality of combination modes, and a number of bits corresponding to one combination mode among the plurality of combination modes is one of the plurality of candidate values.

In some embodiments, the first type of first indication information further includes combination mode indication information; or
second indication information used to indicate the first downlink data includes combination mode indication information;
wherein the combination mode indication information is used to indicate a combination mode of transmission parameters included in the second type of first indication information and/or the number of bits of first indication information of the second type.

In some embodiments, when the first downlink data includes the first type of first indication information and the second type of first indication information, encoded information of the first type of first indication information and encoded information of the second type of first indication information are respectively mapped onto different physical resources; or
when the first downlink data includes the first type of indication information and the second type of first indication information, the encoded information of the first type of first indication information and the encoded information of the second type of first indication information are concatenated and then mapped onto physical resources.

In some embodiments, a time domain position where the first indication information is mapped is before a time domain position where the first downlink data is mapped; or
the first indication information is mapped at a position adjacent or close to a demodulation reference signal of a channel carrying the first downlink data; or
a time domain position where the first indication information is mapped is after a time domain position where the first downlink data is mapped.

In some embodiments, sorting physical resources in a time-domain-first-then-frequency-domain order, the physical resources occupied by the first type of first indication information precede the physical resources occupied by the second type of first indication information; or
sorting physical resources in a frequency-domain-first-then-time-domain order, the physical resources occupied by the first type of first indication information precede the physical resources occupied by the second type of first indication information.

In some embodiments, the first downlink data is mapped onto physical resources not occupied by the first indication information; or
the first downlink data is mapped onto physical resources not occupied by the first type of first indication information.

In some embodiments, the second type of first indication information is mapped a puncturing manner.

In some embodiments, the number of encoded bits of the first downlink data is determined based on at least one of the following parameters: the number of encoded bits of the first indication information, the number of encoded bits of the first type of first indication information, or the number of encoded bits carried by a channel. Here, the number of encoded bits carried by the channel is determined based on the number of physical resources of the channel carrying the first downlink data and a modulation order, and the number of physical resources of the channel carrying the first downlink data is the number of unoccupied physical resources; or

the number of encoded bits of the first downlink data is determined based on at least one of the following parameters: the number of physical resources occupied by the first indication information, the number of physical resources occupied by the first type of first indication information, or the number of physical resources of the channel carrying the first downlink data. Here, the number of physical resources of the channel carrying the first downlink data is the number of unoccupied physical resources.

In some embodiments, the physical resources are at least one of the following: time domain resources, frequency domain resources, or spatial domain resources.

In some embodiments, the number of encoded bits corresponding to the first type of first indication information is determined based on at least one of the following parameters: a coding rate of the first downlink data, a coding rate of the first type of first indication information, a coding rate offset value of the first type of first indication information, the number of bits of first indication information of the first type, a modulation order of the first downlink data, or a modulation order of the first type of first indication information; or
the number of encoded bits corresponding to the second type of first indication information is determined based on at least one of the following parameters: a coding rate of the first downlink data, a coding rate of the second type of first indication information, a coding rate offset value of the second type of first indication information, the number of bits of first indication information of the second type, a modulation order of the first downlink data, or a modulation order of the second type of first indication information.

In some embodiments, the second information or channel is at least one of the following: downlink data information or channel, uplink feedback information or channel, uplink control information or channel, or uplink data information or channel.

In some embodiments, there is an association relationship between the second information or channel and the first downlink data, and the association relationship is preconfigured.

According to the technical solution provided by the embodiments of the present disclosure, by carrying, in downlink data, the first indication information used to indicate transmission parameters of the second information or channel, the terminal device does not need to perform additional blind detection on the downlink control channel, which reduces reception complexity and effectively reduces the power consumption of the terminal device.

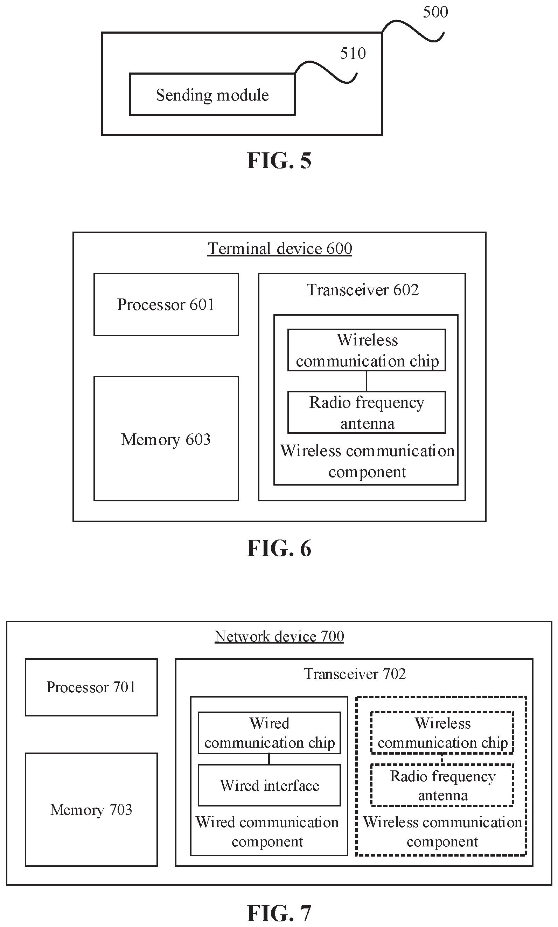

Please refer to FIG. 5, which shows a block diagram of an information transmission apparatus provided by an embodiment of the present disclosure. The apparatus has the function of implementing the examples of the above information transmission method, and the function can be implemented by hardware, or by hardware executing corresponding software. The apparatus may be the network device introduced above, or may be provided in a network device. As shown in FIG. 5, the apparatus 500 may include: a sending module 510.

The sending module 510 is configured to send first downlink data, wherein the first downlink data includes at least one first indication information, and the first indication information is used to indicate transmission parameters of at least one second information or channel.

In some embodiments, the second information or channel includes at least one of the following:
response information of the first downlink data;
information obtained based on processing the first downlink data, the processing including demodulation and/or decoding;
measurement or prediction information obtained based on the first downlink data; or
preconfigured information or channel having an association relationship with the first downlink data.

In some embodiments, the first indication information is of a first type or a second type, wherein the number of bits of first indication information of the first type is a pre-determined first value, and the number of bits of first indication information of the second type is a second value, the second value being one of a plurality of candidate values.

In some embodiments, the first indication information includes at least one of the following transmission parameters: Modulation and Coding Scheme MCS, time-frequency domain resource allocation information, precoding information, power control information, Hybrid Automatic Repeat reQuest HARQ process information, new data indicator information, or redundancy version information.

In some embodiments, the first value is determined based on a plurality of numbers of bits, there are a plurality of combination modes for the transmission parameters corresponding to the second information or channel, and the number of bits corresponding to one combination mode among the plurality of combination modes is a number of bits among the plurality of numbers of bits.

In some embodiments, the first value is greater than or equal to a number of bits among the plurality of numbers of bits.

In some embodiments, when a number of bits corresponding to a first combination mode among the plurality of combination modes is less than the first value, the first type of first indication information includes the transmission parameters corresponding to the first combination mode and padding information, and a sum of the padding information and the number of bits corresponding to the first combination mode equals the first value.

In some embodiments, the combination mode of transmission parameters included in the first type of first indication information is specified by a protocol, or preconfigured by a network device, or determined according to the second information or channel; or
the first value is specified by a protocol, or preconfigured by a network device, or determined according to the second information or channel.

In some embodiments, there are a plurality of combination modes for the transmission parameters corresponding to the second information or channel, the second type of first indication information corresponds to one of the plurality of combination modes, and a number of bits corresponding to one combination mode among the plurality of combination modes is one of the plurality of candidate values.

In some embodiments, the first type of first indication information further includes combination mode indication information; or
second indication information used to indicate the first downlink data includes combination mode indication information;
wherein the combination mode indication information is used to indicate a combination mode of transmission parameters included in the second type of first indication information and/or the number of bits of first indication information of the second type.

In some embodiments, when the first downlink data includes the first type of first indication information and the second type of first indication information, encoded information of the first type of first indication information and encoded information of the second type of first indication information are respectively mapped onto different physical resources; or
when the first downlink data includes the first type of indication information and the second type of first indication information, the encoded information of the first type of first indication information and the encoded information of the second type of first indication information are concatenated and then mapped onto physical resources.

In some embodiments, a time domain position where the first indication information is mapped is before a time domain position where the first downlink data is mapped; or
the first indication information is mapped at a position adjacent or close to a demodulation reference signal of a channel carrying the first downlink data; or
a time domain position where the first indication information is mapped is after a time domain position where the first downlink data is mapped.

In some embodiments, sorting physical resources in a time-domain-first-then-frequency-domain order, the physical resources occupied by the first type of first indication information precede the physical resources occupied by the second type of first indication information; or

sorting physical resources in a frequency-domain-first-then-time-domain order, the physical resources occupied by the first type of first indication information precede the physical resources occupied by the second type of first indication information.

In some embodiments, the first downlink data is mapped onto physical resources not occupied by the first indication information; or
the first downlink data is mapped onto physical resources not occupied by the first type of first indication information.

In some embodiments, the second type of first indication information is mapped a puncturing manner.

In some embodiments, the number of encoded bits of the first downlink data is determined based on at least one of the following parameters: the number of encoded bits of the first indication information, the number of encoded bits of the first type of first indication information, or the number of encoded bits carried by a channel. Here, the number of encoded bits carried by the channel is determined based on the number of physical resources of the channel carrying the first downlink data and a modulation order, and the number of physical resources of the channel carrying the first downlink data is the number of unoccupied physical resources.

Optionally, the number of encoded bits of the first downlink data is determined based on at least one of the following parameters: the number of physical resources occupied by the first indication information, the number of physical resources occupied by the first type of first indication information, or the number of physical resources of the channel carrying the first downlink data. Here, the number of physical resources of the channel carrying the first downlink data is the number of unoccupied physical resources.

In some embodiments, the physical resources are at least one of the following: time domain resources, frequency domain resources, or spatial domain resources.

In some embodiments, the number of encoded bits corresponding to the first type of first indication information is determined based on at least one of the following parameters: a coding rate of the first downlink data, a coding rate of the first type of first indication information, a coding rate offset value of the first type of first indication information, the number of bits of first indication information of the first type, a modulation order of the first downlink data, or a modulation order of the first type of first indication informatio.

Optionally, the number of encoded bits corresponding to the second type of first indication information is determined based on at least one of the following parameters: a coding rate of the first downlink data, a coding rate of the second type of first indication information, a coding rate offset value of the second type of first indication information, the number of bits of first indication information of the second type, a modulation order of the first downlink data, or a modulation order of the second type of first indication information.

In some embodiments, the second information or channel is at least one of the following: downlink data information or channel, uplink feedback information or channel, uplink control information or channel, or uplink data information or channel.

In some embodiments, there is an association relationship between the second information or channel and the first downlink data, and the association relationship is preconfigured.

According to the technical solution provided by the embodiments of the present disclosure, by carrying, in downlink data, the first indication information used to indicate transmission parameters of the second information or channel, the terminal device does not need to perform additional blind detection on the downlink control channel, which reduces reception complexity and effectively reduces the power consumption of the terminal device.

It should be noted that, when implementing its functions, the apparatus provided in the above embodiments only uses the division of the above functional modules as an example. In practical applications, the above functions may be assigned to different functional modules according to actual needs, i.e., the internal structure of the device may be divided into different functional modules to complete all or part of the functions described above.

Regarding the apparatus in the above embodiments, the specific manner in which each module performs operations has been described in detail in the embodiments of the method, and will not be elaborated here.

Please refer to FIG. 6, which shows a schematic structural diagram of a terminal device provided by an embodiment of the present disclosure. The terminal device 600 may include: a processor 601, a transceiver 602, and a memory 603. The transceiver 602 is used to implement sending and/or receiving functions, such as implementing the function of the above receiving module 410, and the processor 601 may be used to implement other processing functions or control sending and/or receiving.

The processor 601 includes one or more processing cores, and the processor 601 executes various functional applications and information processing by running software programs and modules.

The transceiver 602 may include a receiver and a transmitter. For example, the receiver and the transmitter may be implemented as the same wireless communication component, which may include a wireless communication chip and a radio frequency antenna.

The memory 603 may be connected to the processor 601 and the transceiver 602.

The memory 603 may be used to store computer programs executed by the processor, and the processor 601 is used to execute the computer programs to implement the steps in the above method embodiments on the terminal device side.

In some embodiments, the transceiver 602 is configured to receive first downlink data, wherein the first downlink data includes at least one first indication information, and the first indication information is used to indicate transmission parameters of at least one second information or channel.

For details not described in detail in this embodiment, reference may be made to the above embodiments, which will not be described one by one here.

In addition, the memory may be implemented by any type of volatile or non-volatile storage device or a combination thereof. Volatile or non-volatile storage devices include but are not limited to: magnetic disks or optical disks, electrically erasable programmable read-only memory, erasable programmable read-only memory, static random access memory, read-only memory, magnetic memory, flash memory, and programmable read-only memory.

Please refer to FIG. 7, which shows a schematic structural diagram of a network device provided by an embodiment of the present disclosure. The network device 700 may include: a processor 701, a transceiver 702, and a memory 703. The transceiver 702 is used to implement the function of the above sending module 510.

The processor 701 includes one or more processing cores, and the processor 701 executes various functional applications and information processing by running software programs and modules. The processor 701 is used to execute steps other than the sending and receiving steps performed by the network device in the above method embodiments.

The transceiver 702 may include a receiver and a transmitter. For example, the receiver and the transmitter may be implemented as the same wireless communication component, which may include a wireless communication chip and a radio frequency antenna. The transceiver 702 is used to execute the sending and/or receiving steps performed by the terminal device in the above method embodiments.

The memory 703 may be connected to the processor 701 and the transceiver 702.

The memory 703 may be used to store computer programs executed by the processor, and the processor 701 is used to execute the computer programs to implement the steps in the above method embodiments on the network device side.

In addition, the memory may be implemented by any type of volatile or non-volatile storage device or a combination thereof. Volatile or non-volatile storage devices include but are not limited to: magnetic disks or optical disks, electrically erasable programmable read-only memory, erasable programmable read-only memory, static random access memory, read-only memory, magnetic memory, flash memory, and programmable read-only memory.

In some embodiments, the transceiver 702 is configured to send first downlink data, wherein the first downlink data includes at least one first indication information, and the first indication information is used to indicate transmission parameters of at least one second information or channel.

For details not described in detail in this embodiment, reference may be made to the above embodiments, which will not be described one by one here.

Embodiments of the present disclosure also provide a computer-readable storage medium, the storage medium storing a computer program, the computer program being used to be executed by a processor to implement the information transmission method on the terminal device side, or to implement the information transmission method on the network device side. In some embodiments, the computer-readable storage medium may include: ROM (Read-Only Memory), RAM (Random-Access Memory), SSD (Solid State Drives), or optical disks, etc. Among them, random access memory may include ReRAM (Resistance Random Access Memory) and DRAM (Dynamic Random Access Memory).

Embodiments of the present disclosure also provide a chip, the chip including a programmable logic circuit and/or program instructions, and when the chip is running, it is used to implement the information transmission method on the terminal device side, or to implement the information transmission method on the network device side.

Embodiments of the present disclosure also provide a computer program product, the computer program product including a computer program, the computer program being stored in a computer-readable storage medium, a processor reading and executing the computer program from the computer-readable storage medium, to implement the information transmission method on the terminal device side, or to implement the information transmission method on the network device side.

It should be understood that "indication" mentioned in the embodiments of the present disclosure may be direct indication, indirect indication, or indicate an association relationship. For example, A indicates B may mean that A directly indicates B, e.g., B can be obtained through A; or that A indirectly indicates B, e.g., A indicates C, and B can be obtained through C; or that there is an association relationship between A and B.

In the description of the embodiments of the present disclosure, the term "correspondence" may mean a direct or indirect correspondence relationship between two parties, or an association relationship between them, or a relationship such as indicating and being indicated, configuring and being configured.

In some embodiments of the present disclosure, "predefined" may be implemented by pre-storing corresponding codes, tables, or other means that can be used to indicate relevant information in devices (e.g., including terminal devices and network devices), and the present disclosure does not limit the specific implementation method thereof. For example, predefined may refer to being defined in a protocol.

In some embodiments of the present disclosure, the "protocol" may refer to a standard protocol in the communication field, which may include, for example, LTE protocols, NR protocols, and related protocols applied to future communication systems, which is not limited in the present disclosure.

The term "multiple" mentioned herein refers to two or more. "And/or" describes the association relationship of associated objects, indicating that three relationships may exist. For example, A and/or B may represent: A exists alone, A and B exist simultaneously, and B exists alone. The character "/" generally indicates that the associated objects are in an "or" relationship.

"Greater than or equal to" mentioned herein may mean greater than or equal to or greater than, and "less than or equal to" may mean less than or equal to or less than.

In addition, the step numbers described herein are only illustrative of one possible execution order among steps. In some other embodiments, the above steps may not be executed in the order of the numbers, e.g., two steps with different numbers may be executed simultaneously, or two steps with different numbers may be executed in an order opposite to that shown in the figures, which is not limited in the embodiments of the present disclosure.

Those skilled in the art should appreciate that in one or more of the above examples, the functions described in the embodiments of the present disclosure may be implemented by hardware, software, firmware, or any combination thereof. When implemented using software, these functions may be stored in a computer-readable medium or transmitted as one or more instructions or code on a computer-readable medium. Computer-readable media includes both computer storage media and communication media including any medium that facilitates transfer of a computer program from one place to another. A storage media may be any available media that can be accessed by a general purpose or special purpose computer.

The above description is only exemplary embodiments of the present disclosure and is not intended to limit the present disclosure. Any modifications, equivalent substitutions, improvements, etc. made within the spirit and principles of the present disclosure shall be included in the protection scope of the present disclosure.

## Claims

1. A method for information transmission, wherein the method is performed by a terminal device, the method comprising:
receiving first downlink data, wherein the first downlink data comprises at least one first indication information, and the first indication information is used to indicate transmission parameters of at least one second information or channel.

2. The method according to claim 1, wherein the second information or channel comprises at least one of:
response information of the first downlink data;
information obtained based on processing the first downlink data, the processing comprising demodulation and/or decoding;
measurement or prediction information obtained based on the first downlink data; or
preconfigured information or channel having an association relationship with the first downlink data.

3. The method according to claim 1 or 2, wherein the first indication information is of a first type or a second type, wherein a number of bits of first indication information of the first type is a pre-determined first value, and a number of bits of first indication information of the second type is a second value, the second value is one of a plurality of candidate values.

4. The method according to claim 3, wherein the first indication information comprises at least one of the following transmission parameters: Modulation and Coding Scheme (MCS), time-frequency domain resource allocation information, precoding information, power control information, Hybrid Automatic Repeat reQuest (HARQ) process information, new data indicator information, or redundancy version information.

5. The method according to claim 3 or 4, wherein the first value is determined based on a plurality of numbers of bits, there are a plurality of combination modes for the transmission parameters corresponding to the second information or channel, and a number of bits corresponding to one combination mode among the plurality of combination modes is a number of bits among the plurality of numbers of bits.

6. The method according to claim 5, wherein the first value is greater than or equal to a number of bits among the plurality of numbers of bits.

7. The method according to claim 6, wherein when a number of bits corresponding to a first combination mode among the plurality of combination modes is less than the first value, the first type of first indication information comprises the transmission parameters corresponding to the first combination mode and padding information, and a sum of the padding information and the number of bits corresponding to the first combination mode equals the first value.

8. The method according to any one of claims 3 to 7, wherein
the combination mode of transmission parameters comprised in the first type of first indication information is specified by a protocol, or preconfigured by a network device, or determined according to the second information or channel; or
the first value is specified by a protocol, or preconfigured by a network device, or determined according to the second information or channel.

9. The method according to claim 3, wherein there are a plurality of combination modes for the transmission parameters corresponding to the second information or channel, the second type of first indication information is to one of the plurality of combination modes, and a number of bits corresponding to one combination mode among the plurality of combination modes is one of the plurality of candidate values.

10. The method according to claim 9, wherein
the first type of first indication information further comprises combination mode indication information; or
second indication information used to indicate the first downlink data comprises combination mode indication information;
wherein the combination mode indication information is used to indicate a combination mode of transmission parameters comprised in the second type of first indication information and/or a number of bits of first indication information of the second type.

11. The method according to any one of claims 3 to 10, wherein when the first downlink data comprises the first type of first indication information and the second type of first indication information, encoded information of the first type of first indication information and encoded information of the second type of first indication information are respectively mapped onto different physical resources; or
when the first downlink data comprises the first type of indication information and the second type of first indication information, the encoded information of the first type of first indication information and the encoded information of the second type of first indication information are concatenated and then mapped onto physical resources.

12. The method according to claim 11, wherein a time domain position where the first indication information is mapped is before a time domain position where the first downlink data is mapped; or
the first indication information is mapped at a position adjacent or close to a demodulation reference signal of a channel carrying the first downlink data; or
a time domain position where the first indication information is mapped is after a time domain position where the first downlink data is mapped.

13. The method according to claim 11 or 12, wherein sorting physical resources in a time-domain-first-then-frequency-domain order, the physical resources occupied by the first type of first indication information precede the physical resources occupied by the second type of first indication information; or
sorting physical resources in a frequency-domain-first-then-time-domain order, the physical resources occupied by the first type of first indication information precede the physical resources occupied by the second type of first indication information.

14. The method according to any one of claims 11 to 13, wherein
the first downlink data is mapped onto physical resources not occupied by the first indication information; or
the first downlink data is mapped onto physical resources not occupied by the first type of first indication information.

15. The method according to claim 14, wherein the second type of first indication information is mapped a puncturing manner.

16. The method according to any one of claims 3 to 15, wherein a number of encoded bits of the first downlink data is determined based on at least one of: a number of encoded bits of the first indication information, a number of encoded bits of the first type of first indication information, or a number of encoded bits carried by a channel; wherein a number of encoded bits carried by the channel is determined based on a modulation order and the number of physical resources of the channel carrying the first downlink data, and the number of physical resources of the channel carrying the first downlink data is a number of unoccupied physical resources; or
a number of encoded bits of the first downlink data is determined based on at least one of: a number of physical resources occupied by the first indication information, a number of physical resources occupied by the first type of first indication information, or a number of physical resources of the channel carrying the first downlink data, wherein the number of physical resources of the channel carrying the first downlink data is the number of unoccupied physical resources.

17. The method according to any one of claims 11 to 16, wherein the physical resources are at least one of: time domain resources, frequency domain resources, or spatial domain resources.

18. The method according to any one of claims 3 to 17, wherein
a number of encoded bits corresponding to the first type of first indication information is determined based on at least one of: a coding rate of the first downlink data, a coding rate of the first type of first indication information, a coding rate offset value of the first type of first indication information, a number of bits of first indication information of the first type, a modulation order of the first downlink data, or a modulation order of the first type of first indication information; or
a number of encoded bits corresponding to the second type of first indication information is determined based on at least one of: the coding rate of the first downlink data, a coding rate of the second type of first indication information, a coding rate offset value of the second type of first indication information, a number of bits of first indication information of the second type, a modulation order of the first downlink data, or a modulation order of the second type of first indication information.

19. The method according to any one of claims 1 to 18, wherein the second information or channel is at least one of: downlink data information or channel, uplink feedback information or channel, uplink control information or channel, or uplink data information or channel.

20. The method according to any one of claims 1 to 19, wherein there is an association relationship between the second information or channel and the first downlink data, and the association relationship is preconfigured.

21. A method for information transmission, wherein the method is performed by a network device, the method comprising:
sending first downlink data, wherein the first downlink data comprises at least one first indication information, and the first indication information is used to indicate transmission parameters of at least one second information or channel.

22. The method according to claim 21, wherein the second information or channel comprises at least one of:
response information of the first downlink data;
information obtained based on processing the first downlink data, the processing comprising demodulation and/or decoding;
measurement or prediction information obtained based on the first downlink data; or
preconfigured information or channel having an association relationship with the first downlink data.

23. The method according to claim 21 or 22, wherein the first indication information is of a first type or a second type, wherein a number of bits of first indication information of the first type is a pre-determined first value, and a number of bits of the second type of first indication information is a second value, the second value is one of a plurality of candidate values.

24. The method according to claim 23, wherein the first indication information comprises at least one of the following transmission parameters: Modulation and Coding Scheme (MCS), time-frequency domain resource allocation information, precoding information, power control information, Hybrid Automatic Repeat reQuest (HARQ) process information, new data indicator information, or redundancy version information.

25. The method according to claim 23 or 24, wherein the first value is determined based on a plurality of numbers of bits, there are a plurality of combination modes for the transmission parameters corresponding to the second information or channel, and a number of bits corresponding to one combination mode among the plurality of combination modes is a number of bits among the plurality of numbers of bits.

26. The method according to claim 25, wherein the first value is greater than or equal to a number of bits among the plurality of numbers of bits.

27. The method according to claim 26, wherein when a number of bits corresponding to a first combination mode among the plurality of combination modes is less than the first value, the first type of first indication information comprises the transmission parameters corresponding to the first combination mode and padding information, and a sum of the padding information and the number of bits corresponding to the first combination mode equals the first value.

28. The method according to any one of claims 23 to 27, wherein
the combination mode of transmission parameters comprised in the first type of first indication information is specified by a protocol, or preconfigured by a network device, or determined according to the second information or channel; or
the first value is specified by a protocol, or preconfigured by a network device, or determined according to the second information or channel.

29. The method according to claim 23, wherein there are a plurality of combination modes for the transmission parameters corresponding to the second information or channel, the second type of first indication information is to one of the plurality of combination modes, and a number of bits corresponding to one combination mode among the plurality of combination modes is one of the plurality of candidate values.

30. The method according to claim 29, wherein
the first type of first indication information further comprises combination mode indication information; or
second indication information used to indicate the first downlink data comprises combination mode indication information;
wherein the combination mode indication information is used to indicate a combination mode of transmission parameters comprised in the second type of first indication information and/or a number of bits of first indication information of the second type.

31. The method according to any one of claims 23 to 30, wherein when the first downlink data comprises the first type of first indication information and the second type of first indication information, encoded information of the first type of first indication information and encoded information of the second type of first indication information are respectively mapped onto different physical resources; or
when the first downlink data comprises the first type of indication information and the second type of first indication information, the encoded information of the first type of first indication information and the encoded information of the second type of first indication information are concatenated and then mapped onto physical resources.

32. The method according to claim 31, wherein a time domain position where the first indication information is mapped is before a time domain position where the first downlink data is mapped; or
the first indication information is mapped at a position adjacent or close to a demodulation reference signal of a channel carrying the first downlink data; or
a time domain position where the first indication information is mapped is after a time domain position where the first downlink data is mapped.

33. The method according to claim 31 or 32, wherein sorting physical resources in a time-domain-first-then-frequency-domain order, the physical resources occupied by the first type of first indication information precede the physical resources occupied by the second type of first indication information; or
sorting physical resources in a frequency-domain-first-then-time-domain order, the physical resources occupied by the first type of first indication information precede the physical resources occupied by the second type of first indication information.

34. The method according to any one of claims 31 to 33, wherein
the first downlink data is mapped onto physical resources not occupied by the first indication information; or
the first downlink data is mapped onto physical resources not occupied by the first type of first indication information.

35. The method according to claim 34, wherein the second type of first indication information is mapped a puncturing manner.

36. The method according to any one of claims 23 to 35, wherein a number of encoded bits of the first downlink data is determined based on at least one of: a number of encoded bits of the first indication information, a number of encoded bits of the first type of first indication information, or a number of encoded bits carried by a channel; wherein a number of encoded bits carried by the channel is determined based on a modulation order and the number of physical resources of the channel carrying the first downlink data, and the number of physical resources of the channel carrying the first downlink data is a number of unoccupied physical resources; or
a number of encoded bits of the first downlink data is determined based on at least one of: a number of physical resources occupied by the first indication information, a number of physical resources occupied by the first type of first indication information, or a number of physical resources of the channel carrying the first downlink data, wherein the number of physical resources of the channel carrying the first downlink data is the number of unoccupied physical resources.

37. The method according to any one of claims 31 to 36, wherein the physical resources are at least one of: time domain resources, frequency domain resources, or spatial domain resources.

38. The method according to any one of claims 23 to 37, wherein
a number of encoded bits corresponding to the first type of first indication information is determined based on at least one of: a coding rate of the first downlink data, a coding rate of the first type of first indication information, a coding rate offset value of the first type of first indication information, a number of bits of first indication information of the first type, a modulation order of the first downlink data, or a modulation order of the first type of first indication information; or
a number of encoded bits corresponding to the second type of first indication information is determined based on at least one of: the coding rate of the first downlink data, a coding rate of the second type of first indication information, a coding rate offset value of the second type of first indication information, a number of bits of first indication information of the second type, a modulation order of the first downlink data, or a modulation order of the second type of first indication information.

39. The method according to any one of claims 21 to 38, wherein the second information or channel is at least one of: downlink data information or channel, uplink feedback information or channel, uplink control information or channel, or uplink data information or channel.

40. The method according to any one of claims 21 to 39, wherein there is an association relationship between the second information or channel and the first downlink data, and the association relationship is preconfigured.

41. A device for information transmission, comprising:
a receiving module, configured to receive first downlink data, wherein the first downlink data comprises at least one first indication information, and the first indication information is used to indicate transmission parameters of at least one second information or channel.

42. The device according to claim 41, wherein the second information or channel comprises at least one of:
response information of the first downlink data;
information obtained based on processing the first downlink data, the processing comprising demodulation and/or decoding;
measurement or prediction information obtained based on the first downlink data; or
preconfigured information or channel having an association relationship with the first downlink data.

43. The device according to claim 41 or 42, wherein the first indication information is of a first type or a second type, wherein a number of bits of first indication information of the first type is a pre-determined first value, and a number of bits of first indication information of the second type is a second value, the second value is one of a plurality of candidate values.

44. The device according to claim 43, wherein the first indication information comprises at least one of the following transmission parameters: Modulation and Coding Scheme (MCS), time-frequency domain resource allocation information, precoding information, power control information, Hybrid Automatic Repeat reQuest (HARQ) process information, new data indicator information, or redundancy version information.

45. The device according to claim 43 or 44, wherein the first value is determined based on a plurality of numbers of bits, there are a plurality of combination modes for the transmission parameters corresponding to the second information or channel, and a number of bits corresponding to one combination mode among the plurality of combination modes is a number of bits among the plurality of numbers of bits.

46. The device according to claim 45, wherein the first value is greater than or equal to a number of bits among the plurality of numbers of bits.

47. The device according to claim 46, wherein when a number of bits corresponding to a first combination mode among the plurality of combination modes is less than the first value, the first type of first indication information comprises the transmission parameters corresponding to the first combination mode and padding information, and a sum of the padding information and the number of bits corresponding to the first combination mode equals the first value.

48. The device according to any one of claims 43 to 47, wherein
the combination mode of transmission parameters comprised in the first type of first indication information is specified by a protocol, or preconfigured by a network device, or determined according to the second information or channel; or
the first value is specified by a protocol, or preconfigured by a network device, or determined according to the second information or channel.

49. The device according to claim 43, wherein there are a plurality of combination modes for the transmission parameters corresponding to the second information or channel, the second type of first indication information is to one of the plurality of combination modes, and a number of bits corresponding to one combination mode among the plurality of combination modes is one of the plurality of candidate values.

50. The device according to claim 49, wherein
the first type of first indication information further comprises combination mode indication information; or
second indication information used to indicate the first downlink data comprises combination mode indication information;
wherein the combination mode indication information is used to indicate a combination mode of transmission parameters comprised in the second type of first indication information and/or a number of bits of first indication information of the second type.

51. The device according to any one of claims 43 to 50, wherein when the first downlink data comprises the first type of first indication information and the second type of first indication information, encoded information of the first type of first indication information and encoded information of the second type of first indication information are respectively mapped onto different physical resources; or
when the first downlink data comprises the first type of indication information and the second type of first indication information, the encoded information of the first type of first indication information and the encoded information of the second type of first indication information are concatenated and then mapped onto physical resources.

52. The device according to claim 51, wherein a time domain position where the first indication information is mapped is before a time domain position where the first downlink data is mapped; or
the first indication information is mapped at a position adjacent or close to a demodulation reference signal of a channel carrying the first downlink data; or
a time domain position where the first indication information is mapped is after a time domain position where the first downlink data is mapped.

53. The device according to claim 51 or 52, wherein sorting physical resources in a time-domain-first-then-frequency-domain order, the physical resources occupied by the first type of first indication information precede the physical resources occupied by the second type of first indication information; or
sorting physical resources in a frequency-domain-first-then-time-domain order, the physical resources occupied by the first type of first indication information precede the physical resources occupied by the second type of first indication information.

54. The device according to any one of claims 51 to 53, wherein
the first downlink data is mapped onto physical resources not occupied by the first indication information; or
the first downlink data is mapped onto physical resources not occupied by the first type of first indication information.

55. The device according to claim 54, wherein the second type of first indication information is mapped a puncturing manner.

56. The device according to any one of claims 43 to 55, wherein a number of encoded bits of the first downlink data is determined based on at least one of: a number of encoded bits of the first indication information, a number of encoded bits of the first type of first indication information, or a number of encoded bits carried by a channel; wherein a number of encoded bits carried by the channel is determined based on a modulation order and the number of physical resources of the channel carrying the first downlink data, and the number of physical resources of the channel carrying the first downlink data is a number of unoccupied physical resources; or
a number of encoded bits of the first downlink data is determined based on at least one of: a number of physical resources occupied by the first indication information, a number of physical resources occupied by the first type of first indication information, or a number of physical resources of the channel carrying the first downlink data, wherein the number of physical resources of the channel carrying the first downlink data is the number of unoccupied physical resources.

57. The device according to any one of claims 51 to 56, wherein the physical resources are at least one of: time domain resources, frequency domain resources, or spatial domain resources.

58. The device according to any one of claims 43 to 57, wherein
a number of encoded bits corresponding to the first type of first indication information is determined based on at least one of: a coding rate of the first downlink data, a coding rate of the first type of first indication information, a coding rate offset value of the first type of first indication information, a number of bits of first indication information of the first type, a modulation order of the first downlink data, or a modulation order of the first type of first indication information; or
a number of encoded bits corresponding to the second type of first indication information is determined based on at least one of: the coding rate of the first downlink data, a coding rate of the second type of first indication information, a coding rate offset value of the second type of first indication information, a number of bits of first indication information of the second type, a modulation order of the first downlink data, or a modulation order of the second type of first indication information.

59. The device according to any one of claims 41 to 58, wherein the second information or channel is at least one of: downlink data information or channel, uplink feedback information or channel, uplink control information or channel, or uplink data information or channel.

60. The device according to any one of claims 41 to 59, wherein there is an association relationship between the second information or channel and the first downlink data, and the association relationship is preconfigured.

61. A device for information transmission, comprising:
a sending module, configured to send first downlink data, wherein the first downlink data comprises at least one first indication information, and the first indication information is used to indicate transmission parameters of at least one second information or channel.

62. The device according to claim 61, wherein the second information or channel comprises at least one of:
response information of the first downlink data;
information obtained based on processing the first downlink data, the processing comprising demodulation and/or decoding;
measurement or prediction information obtained based on the first downlink data; or
preconfigured information or channel having an association relationship with the first downlink data.

63. The device according to claim 61 or 62, wherein the first indication information is of a first type or a second type, wherein a number of bits of first indication information of the first type is a pre-determined first value, and a number of bits of the second type of first indication information is a second value, the second value is one of a plurality of candidate values.

64. The device according to claim 63, wherein the first indication information comprises at least one of the following transmission parameters: Modulation and Coding Scheme (MCS), time-frequency domain resource allocation information, precoding information, power control information, Hybrid Automatic Repeat reQuest (HARQ) process information, new data indicator information, or redundancy version information.

65. The device according to claim 63 or 64, wherein the first value is determined based on a plurality of numbers of bits, there are a plurality of combination modes for the transmission parameters corresponding to the second information or channel, and a number of bits corresponding to one combination mode among the plurality of combination modes is a number of bits among the plurality of numbers of bits.

66. The device according to claim 65, wherein the first value is greater than or equal to a number of bits among the plurality of numbers of bits.

67. The device according to claim 66, wherein when a number of bits corresponding to a first combination mode among the plurality of combination modes is less than the first value, the first type of first indication information comprises the transmission parameters corresponding to the first combination mode and padding information, and a sum of the padding information and the number of bits corresponding to the first combination mode equals the first value.

68. The device according to any one of claims 63 to 67, wherein
the combination mode of transmission parameters comprised in the first type of first indication information is specified by a protocol, or preconfigured by a network device, or determined according to the second information or channel; or
the first value is specified by a protocol, or preconfigured by a network device, or determined according to the second information or channel.

69. The device according to claim 63, wherein there are a plurality of combination modes for the transmission parameters corresponding to the second information or channel, the second type of first indication information is to one of the plurality of combination modes, and a number of bits corresponding to one combination mode among the plurality of combination modes is one of the plurality of candidate values.

70. The device according to claim 69, wherein
the first type of first indication information further comprises combination mode indication information; or
second indication information used to indicate the first downlink data comprises combination mode indication information;
wherein the combination mode indication information is used to indicate a combination mode of transmission parameters comprised in the second type of first indication information and/or a number of bits of first indication information of the second type.

71. The device according to any one of claims 63 to 70, wherein when the first downlink data comprises the first type of first indication information and the second type of first indication information, encoded information of the first type of first indication information and encoded information of the second type of first indication information are respectively mapped onto different physical resources; or
when the first downlink data comprises the first type of indication information and the second type of first indication information, the encoded information of the first type of first indication information and the encoded information of the second type of first indication information are concatenated and then mapped onto physical resources.

72. The device according to claim 71, wherein a time domain position where the first indication information is mapped is before a time domain position where the first downlink data is mapped; or
the first indication information is mapped at a position adjacent or close to a demodulation reference signal of a channel carrying the first downlink data; or
a time domain position where the first indication information is mapped is after a time domain position where the first downlink data is mapped.

73. The device according to claim 71 or 72, wherein sorting physical resources in a time-domain-first-then-frequency-domain order, the physical resources occupied by the first type of first indication information precede the physical resources occupied by the second type of first indication information; or
sorting physical resources in a frequency-domain-first-then-time-domain order, the physical resources occupied by the first type of first indication information precede the physical resources occupied by the second type of first indication information.

74. The device according to any one of claims 71 to 73, wherein
the first downlink data is mapped onto physical resources not occupied by the first indication information; or
the first downlink data is mapped onto physical resources not occupied by the first type of first indication information.

75. The device according to claim 74, wherein the second type of first indication information is mapped a puncturing manner.

76. The device according to any one of claims 63 to 75, wherein a number of encoded bits of the first downlink data is determined based on at least one of: a number of encoded bits of the first indication information, a number of encoded bits of the first type of first indication information, or a number of encoded bits carried by a channel; wherein a number of encoded bits carried by the channel is determined based on a modulation order and the number of physical resources of the channel carrying the first downlink data, and the number of physical resources of the channel carrying the first downlink data is a number of unoccupied physical resources; or
a number of encoded bits of the first downlink data is determined based on at least one of: a number of physical resources occupied by the first indication information, a number of physical resources occupied by the first type of first indication information, or a number of physical resources of the channel carrying the first downlink data, wherein the number of physical resources of the channel carrying the first downlink data is the number of unoccupied physical resources.

77. The device according to any one of claims 71 to 76, wherein the physical resources are at least one of: time domain resources, frequency domain resources, or spatial domain resources.

78. The device according to any one of claims 63 to 77, wherein
a number of encoded bits corresponding to the first type of first indication information is determined based on at least one of: a coding rate of the first downlink data, a coding rate of the first type of first indication information, a coding rate offset value of the first type of first indication information, a number of bits of first indication information of the first type, a modulation order of the first downlink data, or a modulation order of the first type of first indication information; or
a number of encoded bits corresponding to the second type of first indication information is determined based on at least one of: the coding rate of the first downlink data, a coding rate of the second type of first indication information, a coding rate offset value of the second type of first indication information, a number of bits of first indication information of the second type, a modulation order of the first downlink data, or a modulation order of the second type of first indication information.

79. The device according to any one of claims 61 to 78, wherein the second information or channel is at least one of: downlink data information or channel, uplink feedback information or channel, uplink control information or channel, or uplink data information or channel.

80. The device according to any one of claims 61 to 79, wherein there is an association relationship between the second information or channel and the first downlink data, and the association relationship is preconfigured.

81. A communication device, comprising a processor and a memory for storing a computer program, wherein the processor executes the computer program to implement the method according to any one of claims 1 to 20, or the method according to any one of claims 21 to 40.

82. A computer-readable storage medium having stored thereon a computer program that when executed by a processor, implements the method according to any one of claims 1 to 20, or the method according to any one of claims 21 to 40.

83. A chip comprising a programmable logic circuit and/or program instructions that when the chip is running, is/are used to implement the method according to any one of claims 1 to 20, or the method according to any one of claims 21 to 40.

84. A computer program product comprising computer instructions, wherein the computer instructions are stored in a computer-readable storage medium, and a processor reads and executes the computer instructions from the computer-readable storage medium to implement the method according to any one of claims 1 to 20, or the method according to any one of claims 21 to 40.
